# EUROPEAN PATENT APPLICATION

(11) **EP 1 826 259 A1**
(43) Date of publication of application: **29.08.2007**
(21) Application number: 05806996.4
(22) Date of filing: 15.11.2005
(51) Int. Cl.: C09K 11/08, C09K 11/00, C09K 11/61, G01T 1/00, G21K 4/00

(54) **PROCESS FOR PRODUCING RARE EARTH ACTIVATED ALKALINE EARTH METAL FLUOROHALIDE PHOTOSTIMULABLE PHOSPHOR**

(30) Priority: 22.11.2004 JP 2004337236
(71) Applicant: Konica Minolta Medical & Graphic, Inc., Tokyo 163-0512 (JP)
(72) Inventor: WAKAMATSU, H., c/o Konica Minolta Tech. Ctr, Inc., Hachioji-shi, Tokyo 192-8505 (JP); NABETA, H., c/o Konica Minolta Tech. Ctr, Inc., Hachioji-shi, Tokyo 192-8505 (JP)
(74) Representative: McCluskie, Gail Wilson
(86) International application number: PCT/JP2005/020907
(87) International publication number: WO 2006/054532

(57) **Abstract**

An objective is to provide a manufacturing process of a rare earth activated alkaline earth metal fluorohalide stimulable phosphor exhibiting improved productivity accompanied with an X-ray resistance property against repeating use upon X-ray exposure. Disclosed is a liquid phase manufacturing process of a rare earth activated alkaline earth metal fluorohalide stimulable phosphor represented in following Formula (1) possessing the steps of adding an aqueous solution containing inorganic fluoride into a reaction mother liquor in which barium halide is dissolved at a reaction temperature of 85 - 100 °C, to form a crystalline precipitate of a precursor of a rare earth activated alkaline earth metal fluorohalide stimulable phosphor, and removing a solvent from the reaction mother liquor, wherein a precursor of a stimulable phosphor is prepared via the foregoing steps conducted in parallel.

Formula (I) Ba₍₁₋ₓ₎M²₍ₓ₎FBr_{(y)}I_{(1-y)} : aM¹, bLn, cO

## Description

### TECHNICAL FIELD

The present invention relates to a manufacturing process of a rare earth activated alkaline earth metal fluorohalide stimulable phosphor (hereinafter referred simply to as stimulable phosphor or phosphor).

### BACKGROUND

As an effective means for replacing conventional radiography known is a recording and reproducing method of radiation images using stimulable phosphors described in Japanese Patent O.P.I. Publication No. 55-12145 (hereinafter, the term O.P.I. refers to "Open to Public Inspection").
In the method, a radiation image conversion panel (hereinafter, also simply denoted as panel) comprising a stimulable phosphor is employed, and the method comprises the steps of causing the stimulable phosphor of the panel to absorb radiation having passed through an object or having been radiated from an object, sequentially exciting the stimulable phosphor with an electromagnetic wave such as visible light or infrared rays (hereinafter referred to as "stimulating light") to release the radiation energy stored in the phosphor as light emission (stimulated luminescence), photo-electrically detecting the emitted light to obtain electrical signals, and reproducing the radiation image of the object as a visible image from the electrical signals. The panel, having been read out, is then subjected to image-erasing and prepared for the next photographing cycle. Thus, the radiation image conversion panel can be used repeatedly.

In the radiation image recording and reproducing methods described above, a radiation image is advantageously obtained with a sufficient amount of information by applying radiation to an object at a considerably smaller dose, as compared to conventional radiography employing a combination of a radiographic film and a radiographic intensifying screen. Further, in conventional radiography, the radiographic film is consumed for every photographing; on the other hand, in this radiation image converting method, in which the radiographic image conversion panel is employed repeatedly, is also advantageous in terms of conservation of resources and overall economic efficiency.

The radiation image conversion panel employed in the radiation image recording and reproducing method basically comprises a support and provided thereon a stimulable phosphor layer, provided that, in cases where the phosphor layer is self-supporting, the support is not necessarily required. The stimulable phosphor layer comprises a stimulable phosphor dispersed in a binder. There is also known a stimulable phosphor layer, which is formed by vacuum evaporation or a sintering process, free from a binder, and which comprises an aggregated stimulable phosphor. There is further known a radiation image conversion panel in which a polymeric material is contained in the spacings among the aggregated stimulable phosphor. Further, On the support surface opposite the support having a stimulable phosphor layer commonly provided is a protective layer comprising a polymeric film or an evaporated inorganic film.

The stimulable phosphor, after being exposed to radiation, produces stimulated emission upon exposure to the stimulated luminescence. In practical use, phosphors are employed, which exhibit a stimulated luminescence within a wavelength region of 300 to 500 nm stimulated by stimulating light of wavelengths of 400 to 900 nm. Examples of such stimulable phosphors include rare earth activated alkaline earth metal fluorohalide phosphors described in Japanese Patent O.P.I. Publication Nos. 55-12145, 55-160078, 56-74175, 56-116777, 57-23673, 57-23675, 58-206678, 59-27289, 59-27980, 59-56479 and 59-56480; bivalent europium activated alkaline earth metal fluorohalide phosphors described in Japanese Patent O.P.I. Publication Nos. 59-75200, 60-84381, 60-106752, 60-166379, 60-221483, 60-228592, 60-228593, 61-23679, 61-120882, 61-120883, 61-120885, 61-235486 and 61-235487; rare earth element activated oxyhalide phosphors described in Japanese Patent O.P.I. Publication No. 59-12144; cerium activated trivalent metal oxyhalide phosphors described in Japanese Patent O.P.I. Publication No. 58-69281; bismuth activated alkaline metal halide phosphors described in Japanese Patent O.P.I. Publication No. 60-70484; bivalent europium activated alkaline earth metal halophosphate phosphors described in Japanese Patent O.P.I. Publication Nos. 60-141783 and 60-157100; bivalent europium activated alkaline earth metal haloborate phosphors described in Japanese Patent O.P.I. Publication No. 60-157099; bivalent europium activated alkaline earth metal hydrogenated halide phosphors described in Japanese Patent O.P.I. Publication No. 60-217354; cerium activated rare earth complex halide phosphors described in Japanese Patent O.P.I. Publication Nos. 61-21173 and 61-21182; cerium activated rare earth halophosphate phosphors described in Japanese Patent O.P.I. Publication No. 61-40390; bivalent europium activated cesium rubidium halide phosphors described in Japanese Patent O.P.I. Publication No. 60-78151; bivalent europium activated cerium halide rubidium phosphors described in Japanese Patent O.P.I. Publication No. 60-78151; bivalent europium activated composite halide phosphors described in Japanese Patent O.P.I. Publication No. 60-78153. Specifically, iodide-containing bivalent europium activated alkaline earth metal fluorohalide phosphors, iodide containing rare earth metal activated oxyhalide phosphors and iodide containing bismuth activated alkaline earth metal halide phosphors exhibited stimulated emission of high luminance.

Along with the spread of radiation image conversion panels employing stimulable phosphors is further desired an enhancement of radiation image quality, such as enhancement in sharpness and graininess.

The foregoing manufacturing processes of stimulable phosphors are called a solid phase process or calcination method, in which pulverization after calcination is indispensable, however, there were problems such that it was difficult to control the particle form affecting sensitivity and image performance. Of means for enhancing image quality of radiation images is valid preparation of fine particles of a stimulable phosphor and enhancing particle size uniformity of the fine stimulable phosphor particles, i.e., narrowing the particle size distribution.

Preparation of stimulable phosphors in the liquid phase described in Japanese Patent O.P.I. Publication Nos. 7-233369 and 9-291278 is a method of obtaining a stimulable phosphor precursor in the form of fine particles by adjusting the concentration of a phosphor raw material solution, which is valid as a method of preparing stimulable phosphor powder having a narrow particle size distribution. Of rare earth activated alkaline earth metal fluorohalide stimulable phosphors, a phosphor having higher iodide content is preferred in terms of reduction of radiation exposure. This is due to the fact that iodine exhibits a higher X-ray absorption than bromine.

Alkaline earth metal fluoroiodide stimulable phosphors prepared in the liquid phase are advantageous in luminance and graininess but when a precursor thereof is prepared in the liquid phase, the following problems arise. Thus, as described in Japanese Patent O.P.I. Publication Nos. 9-291278 and 10-88125, the precursor crystals are prepared in such a manner that: (i) barium iodide is dissolved in water or organic solvents and to the obtained solution, an inorganic iodide solution is added with stirring; or (ii) ammonium fluoride is dissolved in water and to the obtained solution, a barium iodide solution is added with stirring. However, in (i), low barium iodide needs to be present in excess in the solution and the stoichiometric ratio of barium iodide to barium fluoroiodide obtained after solid-liquid separation to added barium iodide often exhibits as small a value as 0.4 or so. Thus, the yield of an alkaline earth metal fluoroiodide stimulable phosphor is often about 40% of the added barium iodide.

Even in (ii), excess barium iodide is needed for inorganic fluoride and the yield is also low. Thus, there are problems that the liquid phase synthesis of barium fluoroiodide results in a lower yield, consequently leading to lowered productivity. Reducing the concentration of barium iodide in the mother liquor to enhance the yield results in an increase of particle size, leading to deteriorated image quality.

To enhance the yield of a rare earth activated alkaline earth metal stimulable phosphor, specifically, an alkaline earth metal fluoroiodide stimulable phosphor, Japanese Patent O.P.I. Publication No. 11-29324 discloses a method for obtaining cubic or rectangular rare earth element-containing barium fluoroiodide crystals having a basic composition of BaFI:xLn (in which Ln: is at least a rare earth element selected from Ce, Pr, Sm, Eu, Gd, Tb, Tm and Yb, 0 < x ≤ 0.1) which is obtained by adding a fluorine source to the mother liquor and concentrating the solution.

As a result of the study by the inventors of this application, however, it was proved that although cubic or rectangular BaFI crystals were formed, the concentration by spontaneous evaporation markedly lowered its productivity and was industrially unacceptable. It was further proved that the thus obtained cubic or rectangular crystal particles exhibited larger sizes and the particle size distribution was rather broad, leading to deteriorated image characteristics which was unacceptable in practical use.

A Process of dry gas aeration, reduced pressure, or liquid membrane preparation (process of increasing the heat transfer area) is provided as a process of improving the concentration (Refer to Patent Document 1, for example). The high yield of a phosphor can be obtained via this process.

However, it has been observed that sensitivity in a plate is deteriorated via repeating use upon X-ray exposure and erasure, and it is practically unsatisfactory.
(Patent Document 1) Japanese Patent O.P.I. Publication No. 2003-236303.

### DISCLOSURE OF THE INVENTION

It is an object of the present invention to provide a manufacturing process of a stimulable phosphor exhibiting improved productivity accompanied with an X-ray resistance property against repeating use upon X-ray exposure, and characteristics of high sensitivity together with high image quality.

The above object of the present invention is accomplished by the following structures.
(Structure 1) A liquid phase manufacturing process of a rare earth activated alkaline earth metal fluorohalide stimulable phosphor represented in following Formula (1) possessing the steps of:
   (a) adding an aqueous solution containing inorganic fluoride into a reaction mother liquor in which barium halide is dissolved at a reaction temperature of 85 - 100 °C, to form a crystalline precipitate of a precursor of a rare earth activated alkaline earth metal fluorohalide stimulable phosphor; and
   (b) removing a solvent from the reaction mother liquor,
   wherein a precursor of a stimulable phosphor is prepared via the foregoing steps (a) and (b) conducted in parallel.

   Formula (I) Ba₍₁₋ₓ₎M²₍ₓ₎FBr_{(y)}I_{(1-y)} : aM¹, bLn, cO

   wherein M¹ is at least an alkali metal selected from the group including Li, Na, K, Rb and Cs; M² is at least an alkaline earth metal selected from the group including Be, Mg, Ca and Sr; Ln is at least one rare earth element selected from the group including Ce, Pr, Sm, Eu, Gd, Tb, Tm, Dy, Ho, Nd, Er and Yb; and x, y, a, b and c are values satisfying the following conditions: 0≤x≤0.3, 0≤y≤0.3, 0≤a≤0.05 0<b≤0.2 and 0≤c≤0.1.
(Structure 2) The liquid phase manufacturing process of a rare earth activated alkaline earth metal fluorohalide stimulable phosphor of Structure 1, wherein a barium concentration contained in the reaction mother liquor is 3.0 - 4.5 mol/l.
(Structure 3) The liquid phase manufacturing process of a rare earth activated alkaline earth metal fluorohalide stimulable phosphor of Structure 1 or 2, wherein a weight ratio of the reaction mother liquor after solvent removal to that before solvent removal is not more than 0.97.
(Structure 4) The liquid phase manufacturing process of a rare earth activated alkaline earth metal fluorohalide stimulable phosphor of any one of Structures 1 - 3,
   wherein a heating process of the reaction mother solution is conducted to remove a solvent in combination with another process of removing the solvent.

### DESCRIPTION OF THE PREFERRED EMBODIMENTS

A liquid phase manufacturing process of a rare earth activated alkaline earth metal fluorohalide stimulable phosphor represented in following Formula (1) possessing the steps of adding an aqueous solution containing inorganic fluoride into a reaction mother liquor in which barium halide is dissolved at a reaction temperature of 85 - 100 °C, to form a crystalline precipitate of a precursor of a rare earth activated alkaline earth metal fluorohalide stimulable phosphor, and removing a solvent from the reaction mother liquor, wherein a precursor of a stimulable phosphor is prepared, and the precursor is calcined to obtain the stimulable phosphor via the foregoing steps conducted in parallel. Effects of the present invention were obtained by conducting the above steps.

Formula (I) Ba₍₁₋ₓ₎M²₍ₓ₎FBr_{(y)}I_{(1-y)} : aM¹, bLn, cO

wherein M¹ is at least an alkali metal selected from the group including Li, Na, K, Rb and Cs; M² is at least an alkaline earth metal selected from the group including Be, Mg, Ca and Sr; Ln is at least one rare earth element selected from the group including Ce, Pr, Sm, Eu, Gd, Tb, Tm, Dy, Ho, Nd, Er and Yb; and x, y, a, b and c are values satisfying the following conditions: 0≤x≤0.3, 0≤y≤0.3, 0≤a≤0.05 0<b≤0.2 and 0≤c≤0.1.

Representative embodiments of the manufacturing process of a stimulable phosphor represented by Formula (1) according to this invention will now be described.

The manufacturing process of a stimulable phosphor precursor described in Japanese Patent O.P.I. Publication No. 8-265525 and the apparatus for preparing a phosphor precursor described in Japanese Patent O.P.I. Publication No. 8-266718 are preferably applicable to preparing a stimulable phosphor precursor by a liquid phase. The stimulable phosphor precursor refers to the state at which a material represented by the foregoing Formula (I) has not yet been subjected to a temperature of 600 °C or higher and the stimulable phosphor precursor emits neither stimulated emission nor instantaneous emission.

In this invention, the stimulable phosphor precursor is preferably prepared via the liquid phase synthesis.

The rare earth activated alkaline earth metal fluorohalide stimulable phosphor is preferably prepared via the liquid phase process in which the particle size can be easily controlled, rather than via the solid phase process in which control of the particle shape is difficult. It is specifically preferred to prepare stimulable phosphors via the liquid phase process.

### MANUFACTURING PROCESS:

Thus, the method comprises the steps of: preparing within a reaction vessel an aqueous mother liquor having BaI₂ concentration of at least 3.0 mol/l (preferably, at least 3.3 mol/l) and a halide of Ln, provided that when "x" of the foregoing Formula (I) is not zero, the mother liquor further contains a halide of M² and when "y" of Formula (I) is not zero, the mother liquor further contains BaBr₂ and a halide of M¹; adding an aqueous solution containing a 3 mol/l or more (preferably not less than 6 mol/l) of inorganic fluoride (preferably, ammonium fluoride or alkali metal fluoride) into the mother liquor, while maintaining the mother liquor at 85 - 100 °C, to form a crystalline precipitate of a precursor of a rare earth activated alkaline earth metal fluorohalide stimulable phosphor; removing a solvent from the reaction mother liquor with adding the inorganic fluoride or after completion of the addition; separating the crystalline precipitate of the precursor from the mother liquor; and calcining the separated precursor precipitates with avoiding sintering.

Next, a manufacturing process of a stimulable phosphor represented by Formula (1) in the present invention will be detailed.

### [PREPARATION OF PRECURSOR CRYSTALLINE PRECIPITATE AND STIMULABLE PHOSPHOR]

Initially, material(s) except for a fluoride compound are dissolved in an aqueous medium. Thus, BaI₂ and a halide of Ln (and if necessary, a halide of M² and a halide of M¹) are each added into an aqueous solvent and dissolved with stirring to prepare an aqueous solution. The amounts of BaI₂ and the aqueous solvent are pre-adjusted so as to have 3.0 mol/l or more (and preferably 3.3 mol/l or more) of a concentration of BaI₂. In this case, insufficient barium concentrations do not form a precursor with the intended composition or form precursor particles with excessively larger sizes even if obtained. As a result of studies by the inventors, it was proved that fine precursor particles can be obtained at a concentration of 3.0 - 4.5 mol/l. A small amount of acid, ammonia, alcohol, water-soluble polymer or fine grained powder of water-insoluble metal oxide may be added thereto. It is also preferred that lower alcohols (e.g., methanol, ethanol) are added within a range which markedly lowers the solubility of BaI₂. The solution (reaction mother liquor) is maintained at 85 - 100 °C.

Next, into the reaction mother liquor maintained at 85 - 100 °C, an aqueous solution of an inorganic fluoride (such as ammonium fluoride or alkali metal fluoride) is introduced via a pipe provided with a pump. The aqueous solution is preferably introduced to a portion in which stirring is vigorously performed. Introduction of the fluoride aqueous solution into the reaction mother liquor results in precipitation of precursor crystals of the rare earth activated alkaline earth metal fluorohalide phosphor represented by Formula (I).

Then, solvent is removed from the reaction mixture at the same time when the above aqueous solution is introduced. An amount of removed solvent after to before solvent removal is preferably 2% or more in weight ratio. In the case of not more than 2%, those crystals tend to be immature BFI. It is preferred to remove a solvent in an amount of not less than 2%, and more preferably not less than 5%.

The time required for solvent removal largely affects not only productivity but also the particle shape and the particle size distribution, so that an optimal removal method is selected. In general, the reaction mixture is heated to evaporate a solvent and this method is also beneficial in this invention. A precursor having the intended composition can be obtained by the optimal solvent removal. Another method of removing a solvent is preferably employed in combination to enhance productivity and retain optimal particle shape. The use of a separation membrane such as a reverse osmosis membrane can also be selected. In this invention, the following removing methods are preferred in terms of productivity.

### 1. DRY GAS AERATION

In a closed reaction vessel, two or more openings are provided, through which dry gas is allowed to pass. Any gas is optionally selected but common air or nitrogen is preferred in terms of safety. The solvent is removed concomitantly with the aerating gas, depending on the saturated water vapor content in the gas. Besides permeating through openings in the reaction vessel, it is useful to allow the gas to bubble through a liquid phase to cause the solvent to be absorbed into the bubbles.

### 2. REDUCED PRESSURE

As is well known, vapor pressure is lowered by evacuation. Thus, a solvent is efficiently removed under reduced pressure. The extent of the reduced pressure is optimally selected, depending on the kind of solvent. In cases where water is used as a solvent, for example, the reduced pressure is preferably not more than 650 mmHg.

### 3. LIQUID MEMBRANE

Removal of a solvent can be efficiently effected by enlarging the vaporization area. In cases when undergoing reaction by heating with stirring in a reaction vessel of a given volume, heating is generally done in such a manner that a heating means is immersed into the liquid or is provided outside the vessel. In this case, the heat transfer area is limited to the portion of the heating means in contact with the liquid, so that the heat transfer area decreases with removal of the solvent, retarding removal of the solvent. To prevent such retardation, using a pump or a stirrer, the reaction solution is sprayed onto the wall of the reaction vessel to increase the heat transfer area. This method of spraying liquid onto the wall of the reaction vessel to form a liquid membrane is known as a wetted wall method. The wetted wall can be formed not only using a pump but also using a stirrer described in Japanese Patent O.P.I. Publication Nos. 6-335627 and 11-235522.

These methods are employed alone or in combination. Examples thereof include the combination of the formation of the wetted wall and maintaining the reaction vessel under the reduced pressure and the combination of the formation of the wetted wall and dry gas aeration. Of these, the former is preferred, as described in Japanese Patent O.P.I. Publication No. 6-335627.

The resulting crystals of the phosphor precursor are separated from the solution via filtration or centrifugation, washed sufficiently with liquid such as methanol and then dried. To the dried crystals of the phosphor precursor is added an anti-sintering agent such as fine alumina powder or fine silica powder, which adheres to the surface of the crystals. It is possible to save addition of the anti-sintering agent by selecting the calcination conditions.

Further, the phosphor precursor crystals are charged into a heat-resistant vessel such as a silica port, an alumina crucible or a silica crucible and then placed in the core portion of an electric furnace to be calcined, without causing the crystals to sinter. A calcination temperature is 400 - 1300 °C, and preferably 500 - 1000 °C. The calcination time of 0.5 - 12 hours is appropriate, though it depends on a charging amount of a phosphor material admixture, calcination temperature, and removal temperature out of an electric furnace.

As a calcinations atmosphere is employed a nitrogen gas atmosphere, a neutral atmosphere such as an argon gas atmosphere, a nitrogen gas atmosphere containing a small amount of hydrogen gas, a weakly reducible atmosphere such as a carbon dioxide atmosphere containing carbon monoxide, or a trace amount of oxygen-introduced atmosphere. Calcination is effected preferably employing the method described in Japanese Patent O.P.I. Publication No. 2000-8034.

Thus, a rare earth activated alkaline earth metal fluorohalide stimulable phosphor can be obtained via the calcinations described above.

### (PREPARATION OF RADIATION IMAGE CONVERSION PANEL, PHOSPHOR LAYER, COATING PROCESS, SUPPORT, AND PROTECTIVE LAYER)

As supports used in the radiation image conversion panel according to the present invention are employed a various types of polymeric material, glass and metals. Materials which can be converted to a flexible sheet or web are particularly preferred in handling as a information recording material. From this point, there are preferred plastic resin films such as cellulose acetate films, polyester films, polyamide films, polyimide films, triacetate films or polycarbonate films; metal sheets such as aluminum, iron, copper or chromium; or metal sheets having a metal oxide covering layer.

A thickness of the support depends on properties of the material, and is generally 80 - 1000 µm and preferably 80 - 500 µm in terms of handling.

The surface of the support may be glossy or may be matte for the purpose of enhancing adhesiveness to a stimulable phosphor layer.

The support may be provided with a subbing layer under the stimulable phosphor layer for the purpose of enhancing adhesiveness to the phosphor layer.

Examples of binders used in the stimulable phosphor layer according to the present invention include proteins such as gelatin, polysaccharide such as dextran, natural polymeric materials such as arabic gum and synthetic polymeric materials such as polyvinyl butyral, polyvinyl acetate, nitrocellulose, ethylcellulose, vinylidene chloride/vinyl chloride copolymer, polyalkyl (metha)acrylate, vinyl chloride/vinylacetate copolymer, polyurethane, cellulose acetate butyrate, polyvinyl alcohol and linear polyester. Of these binders are preferred nitrocellulose, linear polyester, polyalkyl (metha)acrylate, a mixture of nitrocellulose and linear polyester, a mixture of nitrocellulose and polyalkyl (metha)acrylate and a mixture of polyurethane and polyvinyl butyral. The binder may be cured with a cross-linking agent. The stimulable phosphor layer can be coated on a subbing layer, for example, according to the following manner.

Thus, an iodide-containing stimulable phosphor, a compound such a phosphite ester for preventing the above-mentioned yellow stain and binder are added into an optimal solvent to prepare a coating solution in which phosphor particles and particles of the compound(s) are uniformly dispersed in a binder solution.

In this invention, film-making binders used in the conventional layer constitution are usable as a binder in this invention, including proteins such as gelatin, polysaccharides such as dextrin or Arabic gum, polyvinyl butyral, polyvinyl acetate, nitrocellulose, ethyl cellulose, vinylidene chloride/vinyl chloride copolymer, polymethyl methacrylate, vinyl chloride/vinyl acetate copolymer, polyurethane, cellulose acetate butylate, and polyvinyl alcohol. The binder is employed in an amount of 0.01 - 1 part by weight per 1 part by weight of the stimulable phosphor. A smaller amount of the binder is preferred in terms of sensitivity and sharpness of the radiation image conversion panel and a range of 0.03 - 0.2 parts by weight is preferred in terms of easiness of coating.

A ratio of the binder to the stimulable phosphor (with the proviso that in the case of all of the binder being an epoxy group-containing compound, the ratio is that of the compound to the phosphor) depends on characteristics of the objective radiation image conversion panel, the kind of the phosphor and an addition amount of the epoxy group-containing compound. Examples of solvents used for preparing the coating solution include lower alcohols such as methanol, ethanol, 1-propanol, 2-propanol, and n-butanol; chlorine-containing hydrocarbons such as methylene chloride and ethylene chloride; ketones such as acetone, methyl ethyl ketone, methyl isobutyl ketone; esters of a lower fatty acid and lower alcohol such as methyl acetate, ethyl acetate and butyl acetate; ethers such as dioxane, ethylene glycol ethyl ether and ethylene glycol monomethyl ether; toluene; and a mixture thereof.

Examples of solvents used for the coating solution of the stimulable phosphor layer include lower alcohols such as methanol, ethanol, isopropanol, and n-butanol; ketones such as acetone, methyl ethyl ketone, methyl isobutyl ketone and cyclohexanone; esters a lower fatty acid and a lower alcohol, such as methyl acetate, ethyl acetate and n-butyl acetate; ethers such as dioxane, ethylene glycol monoethyl ether and ethylene glycol monomethyl ether; aromatic compounds such as tolyol and xylol; halogenated hydrocarbons such as methylene chloride and ethylene chloride; and their mixtures.

There may be incorporated, in the coating solution, a variety of additives, such as a dispersing agent for improving dispersibility of the phosphor in the coating solution and a plasticizer for enhancing bonding strength between the binder and phosphor. Examples of the dispersing agent include phthalic acid, stearic acid, caproic acid and oleophilic surfactants. Examples of the plasticizer include phosphate esters such as triphenyl phosphate, tricresyl phosphate and diphenyl phosphate; phthalate esters such as diethyl phthalate, dimethoxyethyl phthalate; glycolic acid esters such as ethylphthalylethyl glycolate and buthylphthalylbuthyl glycolate; and polyesters of polyethylene glycol and aliphatic dibasic acid such as polyester of triethylene glycol and adipinic acid, and polyester of diethylene glycol and succinic acid.

Incidentally, the dispersing agent such as stearic acid, phthalic acid, caproic acid, or oleophilic surfactants may be mixed in order to improve dispersibility of the stimulable phosphor layer phosphor particles in the coating solution used for the stimulable phosphor layer. A plasticizer may be added to binder, if desired. Examples of the foregoing plasticizer include phthalic acid ester such as phthalic acid diethyl or phthalic acid dibuthyl, aliphatic dibasic acid ester such as succinic acid diisodecyl or adipic acid dioctyl, and glycolic acid ester such as ethylphthalylethyl glycolate or buthylphthalylbuthyl glycolate.

The coating solution as prepared above was uniformly coated subsequently on the surface of the subbing layer to form a coating layer. Coating can be carried out by conventional coating means, such as doctor blade, roll coater and knife coater.

Next, the coated layer is gradually heated to dry, and then formation of the stimulable phosphor layer on the subbing layer is completed. In this case, the thickness of a stimulable phosphor layer depends on characteristics of the objective radiation image conversion panel, kinds of stimulable phosphors, the mixing ratio between a binder to phosphor and so forth, and is generally 20 - 1000 µm and preferably 50 - 500 µm.

The coating solution of the stimulable phosphor layer can be prepared by using a dispersing apparatus, such as a ball mill, sand mill, atriter, three-roll mill, high-speed impeller, Kady mill and ultrasonic homogenizer. The prepared coating solution is coated on a support by using a doctor blade, roll coater or knife coater and dried to form the stimulable phosphor layer. After the above coating solution may be coated on a protective layer and dried, the stimulable phosphor layer may be adhered to the support.

The thickness of the stimulable phosphor layer in the radiation image conversion panel of the present invention depends on characteristics of the radiation image conversion panel, kinds of stimulable phosphors, and the mixing ratio between a binder to phosphor, and is preferably selected in the range of 10 - 1000 µm, and more preferably in the range of 10 - 500 µm.

Examples of an europium activated barium fluoroiodide stimulable phosphor have been described so far but a europium activated barium fluorobromide stimulable phosphor and other stimulable phosphors represented by Formula (I) can also be prepared similarly to the manufacturing processes described above.

### EXAMPLE

Next, the present invention will be explained employing examples, but the present invention is not limited thereto.

### Example 1

To synthesize a precursor of europium activated barium fluoroiodide stimulable phosphor, 2500 ml of an aqueous BaI₂ solution (having 3.35 mol/l) and 26.5 ml of EuI₃ solution (having 0.2 mol/l) were added to a pressure reaction vessel provided with two openings. Reaction mother liquor was maintained at 92 °C with stirring. Then, 600 ml of aqueous ammonium fluoride solution (having 10 mol/l) was added to the mother liquor using a roller pump to form precipitates. After completing addition, the reaction mixture was aerated with dry air at a rate of 10 lit./min. for 20 min. The weight ratio of the mother liquor after aeration to that before aeration was 0.92. Stirring further continued for 90 minutes at the same temperature, while closing the reaction vessel and then the reaction mixture was filtered and the precipitate was washed with 2000 ml of ethanol. The thus obtained precipitate of a phosphor precursor was weighed to determine the yield by comparing the theoretical yield obtained from the added barium amount. The precipitate was subjected to X-ray diffractometry using Cu-Kα line.

Next, to prevent variation in grain shape and grain size distribution, super fine-grained alumina powder was added in an amount of 1% by weight and sufficiently stirred with a mixer to allow the super-fine alumina powder to uniformly be adhered onto the surface of the crystals. A mixture of europium activated barium fluoroiodide crystalline powder and alumina super fine grains was charged into a quartz boat, and calcined at 850 °C for 2 hours in hydrogen gas atmosphere employing a tube furnace to obtain europium activated barium fluoroiodide stimulable phosphor particles.

### Example 2

The precipitate was obtained similarly to Example 1 provided that during adding ammonium fluoride, the pressure within the reaction vessel was reduced to 560 mmHg using a circulating aspirator to remove a solvent under reduced pressure. The mother liquor weight ratio of after to before evacuation was 0.90. The yield was determined, and X-ray diffractometry was done similarly to Example 1.

### Comparative example 1

To synthesize a precursor of europium activated barium fluoroiodide stimulable phosphor, 2500 ml of an aqueous BaI₂ solution (having 1.50 mol/l) and 26.5 ml of EuI₃ solution (having 0.2 mol/l) were added to a pressure reaction vessel provided with two openings. Reaction mother liquor was maintained at 92 °C with stirring. Then, 600 ml of aqueous ammonium fluoride solution (having 10 mol/l) was added to the mother liquor using a roller pump to form precipitates. After completing addition, the reaction mixture was aerated with dry air at a rate of 10 lit./min. for 20 min. The weight ratio of the mother liquor after aeration to that before aeration was 0.92. Stirring further continued for 90 minutes at the same temperature, while closing the reaction vessel and then the reaction mixture was filtered and the precipitate was washed with 2000 ml of ethanol. The thus obtained precipitate of a phosphor precursor was weighed to determine the yield by comparing the theoretical yield obtained from the added barium amount. The precipitate was subjected to X-ray diffractometry using Cu-Kα line.

Next, to prevent variation in grain shape and grain size distribution, super fine-grained alumina powder was added in an amount of 1% by weight and sufficiently stirred with a mixer to allow the super-fine alumina powder to uniformly be adhered onto the surface of the crystals. A mixture of europium activated barium fluoroiodide crystalline powder and alumina super fine grains was charged into a quartz boat, and calcined at 850 °C for 2 hours in hydrogen gas atmosphere employing a tube furnace to obtain europium activated barium fluoroiodide stimulable phosphor particles.

### Comparative example 2

The precipitate was obtained similarly to Example 1 except that the reaction temperature was set to 80 °C. The mother liquor weight ratio of after to before concentration was 0.91.

### (EVALUATION OF STIMULABLE PHOSPHOR)

The following evaluation was made for the resulting phosphors.

### <<X-RAY DIFFRACTION HALF-WIDTH>>

### (CRYSTALLINITY EVALUATION OF RESULTING PHOSPHORS)

Crystallinity was evaluated via half-width of diffraction patterns obtained by a powder X-ray diffraction method. A half-width as a comparative point was measured under the conditions of 2θ = 27° and (hkl)=(110). The tube voltage and tube current were 80 kV and 100 mA, respectively. In addition, the wider half-width means that crystallinity in the case of the wider half-width is more deteriorated than in the narrower half-width.

### (Evaluation of radiation image conversion panel)

Next, each of radiation image conversion panels was evaluated.

### <<SENSITIVITY>>

Each of the prepared radiation image conversion panels was exposed to X-rays at 80 KVp and then excited by the light of a He-Ne laser (633 nm). Then, the stimulated luminescence emitted from the phosphor layer was captured by a detector (photomultiplier with a spectral sensitivity of S-5) to measure the intensity of the stimulated luminescence. The sensitivity is shown as a relative value in Table 1.

### <<SHARPNESS>>

The radiation image conversion panels, each was exposed to X-rays at a tube voltage of 80 KVp via a MTF chart made of lead. Then, the stimulated luminescence emitted from the phosphor layer was captured by a detector to convert electric signals, subjected to analog-digital conversion and recorded on a magnetic tape. The x-ray images recorded on the magnetic tape was analyzed by a computer and represented by the modulation transfer function (MTF). The MTF value was represented by percentage at a special frequency of 2 cycles/mm in Table 1.

### (X-RAY RESISTANCE PROPERTY)

After a radiation image conversion panel was exposed to 10R X-ray at a tube voltage of 80 kVp, X-ray information recorded in the radiation image conversion panel was erased with halogen light. This process was repeated until the accumulated amount of X-ray reached 1000R, and a falling rate, based on initial sensitivity was calculated. In addition, the lower the falling rate, the higher the X-ray resistance property (%) is.

Evaluated results are shown below.

**Table 1**

| Sample No. | Specific matters introduced | X-ray diffraction half-value width | Sensitivity | Sharpness | X-ray resistance (%) |
|---|---|---|---|---|---|
| Example 1 | Under aeration | 0.05 | 150 | 125 | 90 |
| Example 2 | Under reduced pressure | 0.03 | 160 | 120 | 91 |
| Comparative Example 1 | Lowered Ba concentration | 0.2 | 100 | 100 | 75 |
| Comparative Example 2 | Lowered temperature | 0.3 | 70 | 95 | 50 |

As is clear from Table 1, it is to be understood that Examples of the present invention obtained via this manufacturing process of a rare earth activated alkaline earth metal fluorohalide stimulable phosphor according to the present invention exhibit excellent properties in comparison to Comparative examples.

### POSSIBILITY OF INDUSTRIAL USE

A process of the present invention for preparation of a stimulable phosphor is capable of manufacturing a stimulable phosphor producing an excellent effect such as an X-ray resistance property against repeating use upon X-ray exposure as well as high image quality accompanied with high sensitivity.

## Claims

1. A liquid phase manufacturing process of a rare earth activated alkaline earth metal fluorohalide stimulable phosphor represented in following Formula (1) comprising the steps of:
(a) adding an aqueous solution containing inorganic fluoride into a reaction mother liquor in which barium halide is dissolved at a reaction temperature of 85 - 100 °C, to form a crystalline precipitate of a precursor of a rare earth activated alkaline earth metal fluorohalide stimulable phosphor; and
(b) removing a solvent from the reaction mother liquor,
wherein a precursor of a stimulable phosphor is prepared via the foregoing steps (a) and (b) conducted in parallel.
Formula (I) Ba₍₁₋ₓ₎M²₍ₓ₎FBr_{(y)}I_{(1-y)}:aM¹, bLn, cO
wherein M¹ is at least an alkali metal selected from the group including Li, Na, K, Rb and Cs; M² is at least an alkaline earth metal selected from the group including Be, Mg, Ca and Sr; Ln is at least one rare earth element selected from the group including Ce, Pr, Sm, Eu, Gd, Tb, Tm, Dy, Ho, Nd, Er and Yb; and x, y, a, b and c are values satisfying the following conditions: 0≤x≤0.3, 0≤y≤0.3, 0≤a≤0.05 0<b≤0.2 and 0≤c≤0.1.

2. The liquid phase manufacturing process of a rare earth activated alkaline earth metal fluorohalide stimulable phosphor of Claim 1,
wherein a barium concentration contained in the reaction mother liquor is 3.0 - 4.5 mol/l.

3. The liquid phase manufacturing process of a rare earth activated alkaline earth metal fluorohalide stimulable phosphor of Claim 1 or 2,
wherein a weight ratio of the reaction mother liquor after solvent removal to that before solvent removal is not more than 0.97.

4. The liquid phase manufacturing process of a rare earth activated alkaline earth metal fluorohalide stimulable phosphor of any one of Claims 1 - 3,
wherein a heating process of the reaction mother solution is conducted to remove a solvent in combination with another process of removing the solvent.
